# EUROPÄISCHE PATENTSCHRIFT

(11) **EP 0 952 106 B1**
(45) Veröffentlichungstag und Bekanntmachung des Hinweises auf die Patenterteilung: **17.12.2003**
(21) Anmeldenummer: 99107076.4
(22) Anmeldetag: 12.04.1999
(51) Int. Cl.: B66C 1/02, B66F 3/35

(54) **Underdruckhandhabungseinrichung**
Handling apparatus actuated by vacuum
Appareil de manipulation à dépression

(30) Priorität: 21.04.1998 DE 19817754
(43) Veröffentlichungstag der Anmeldung: 27.10.1999
(73) Patentinhaber: J. Schmalz GmbH, D-72293 Glatten (DE)
(72) Erfinder: Schmalz, Kurt, Dr., 72280 Dornstetten (DE); Schmalz, Wolfgang, 72280 Dornstetten (DE); Eisele, Thomas, 78737 Fluorn-Winzeln (DE)
(74) Vertreter: Dreiss, Fuhlendorf, Steimle & Becker

(56) Entgegenhaltungen:
- WO-A-96/03602
- DE-A- 19 928 734
- US-A- 4 413 853
- US-A- 6 039 530
- US-B1- 6 168 220

## Beschreibung

Die Erfindung betrifft eine Unterdruckhandhabungseinrichtung mit einem an eine unterdruckerzeugende Vorrichtung anschließbaren Hubschlauch und einer auf einen zu handhabenden Gegenstand aufsetzbaren Sauggreifereinrichtung, mit der der Gegenstand ansaugbar und durch Zusammenziehen des Hubschlauchs anhebbar ist.

Es sind Unterdruckhandhabungseinrichtungen der vorstehenden Art bekannt geworden, wie zum Beispiel in der WO-A-9 603 602, die dem nächstliegenden Stand der Technik entspricht, die auf der Ansaugseite der Sauggreifereinrichtung einen oder mehrere Taststössel aufweisen, die beim Aufsetzen der Sauggreifereinrichtung auf ein Gegenstand nach Innen gedrückt werden und dabei einen Strömungsquerschnitt freigeben, über den der Gegenstand angesaugt werden kann. Wenn sich der Gegenstand jedoch unbeabsichtigt ablöst, indem beispielsweise eine Kartonverpackung zerreißt, so wird der federvorgespannte Taststössel sofort in Schließstellung bewegt, und es besteht die Gefahr, dass die Sauggreifereinrichtung schlagartig nach oben beschleunigt wird und eine Bedienungsperson dabei verletzt.

Hiervon ausgehend liegt der vorliegenden Erfindung die Aufgabe zugrunde, eine Unterdruckhandhabungseinrichtung der eingangs beschriebenen Art dahingehend zu verbessern, dass bei unbeabsichtigtem Ablösen eines angehobenen Gegenstands ein nach-oben-Schnellen der Sauggreifereinrichtung verhindert wird.

Diese Aufgabe wird bei einer Unterdruckhandhabungseinrichtung der gattungsgemäßen Art gelöst, die gekennzeichnet ist durch ein gewichtskraftbetätigtes Stellorgan, welches unter der Wirkung der Gewichtskraft eines an der Saugseite der Sauggreifereinrichtung angesaugten Gegenstands einen Strömungsquerschnitt ins Innere des Hubschlauchs verschließt und im unbelegten Zustand der Sauggreifereinrichtung freigibt. Es handelt sich hierbei nicht um denjenigen Strömungsquerschnitt, über den der Gegenstand an der Sauggreifereinrichtung angesaugt wird, sondern um eine weitere Belüftungs- oder Strömungsöffnung der Sauggreifereinrichtung oder des Hubschlauchs, die im unbelegten Zustand der Sauggreifereinrichtung geöffnet ist und damit den Unterdruck innerhalb des Hubschlauchs begrenzt.

Nach dem erfindungsgemäßen Vorschlag wird beim Anheben eines angesaugten Gegenstands das Stellorgan durch die Gewichtskraft des angesaugten Gegenstands betätigt und dabei der Strömungsquerschnitt geschlossen, so dass eine größtmögliche Saugleistung zum Anheben des Gegenstands zur Verfügung steht. Wenn sich der Gegenstand unbeabsichtigt ablöst, so verringert sich die Gewichtskraft und dass Stellorgan wird in seine Ausgangsstellung gebracht, in der es den Strömungsquerschnitt ins Innere des Hubschlauchs freigibt. Durch diesen zusätzlichen Strömungsquerschnitt kann eine hinreichende Luftmenge ins Innere des Hubschlauchs strömen, um ein unerwünschtes nach-oben-Schnellen der Sauggreifereinrichtung durch Kontrahieren des Hubschlauchs zu verhindern.

Nach einer Ausführungsform der Erfindung bildet das Stellorgan eine Aufhängung des Hubschlauchs, wobei es sich dabei vorteilhafter Weise zugleich um eine Drehaufhängung handelt.

Nach einer weiteren Ausführungsform der Erfindung ist das Stellorgan federvorgespannt und trägt einen die Ansaugseite bildenden und auf den anzuhebenden Gegenstand aufsetzbaren Sauggreifer oder -teller.

In beiden Fällen wird das Stellorgan bei an der Sauggreifereinrichtung angesaugtem und angehobenem Gegenstand unter der Wirkung der Gewichtskraft des Gegenstands derart betätigt, dass der Strömungsquerschnitt ins Innere des Hubschlauchs verschlossen wird und im unbelegten Zustand freigegeben wird.

Das gewichtskraftbetätigte Stellorgan könnte in beliebig komplizierter Weise unter Verwendung von Kraftsensoren und unter Einsatz elektromagnetischer Stellmittel verwirklicht werden. In besonders einfacher und daher vorteilhafter Weise umfasst das Stellorgan einen federvorgespannten Stössel, der in vertikaler Richtung entsprechend der einwirkenden Gewichtskraft hin- und herbewegbar ist.

Entsprechend der Position des Stellorgans könnte ein Schließorgan in ansich beliebiger Weise mittelbar durch das Stellorgan betätigt werden. Es erweist sich indessen als besonders vorteilhaft, wenn das Stellorgan selbst eine Ventilplatte trägt und mit dieser Ventilplatte den Strömungsquerschnitt einer Öffnung ins Innere des Hubschlauchs verschließt oder freigibt.

Das Stellorgan erstreckt sich vorteilhafter Weise ins Innere der Unterdruckhandhabungseinrichtung und trägt innen die vorstehend erwähnte Ventilplatte, wobei sich eine Feder zwischen der Ventilplatte und einer Wand der Handhabungseinrichtung abstützen kann und so die Ventilplatte von der Wand abzuheben sucht. Wenn das Stellorgan infolge der Gewichtskraft eines angesaugten Gegenstands nach außen belastet wird, so wird die Ventilplatte von innen dichtend gegen eine Strömungsöffnung in der Wand angelegt und der Strömungsquerschnitt verschlossen.

Wenn das Stellorgan - wie eingangs erwähnt - den auf der Gegenstand aufsetzbaren Sauggreifer oder -teller trägt, so könnte der Sauggreifer mit dem Inneren der Sauggreifereinrichtung über ein zusätzliches kanalbildendes Mittel, wie beispielsweise ein flexibler Schlauch, verbunden sein; es erweist sich indessen als vorteilhaft, wenn der Sauggreifer über das Innere des Stellorgans mit der Sauggreifereinrichtung bzw. dem Hubschlauch und damit der unterdruckerzeugenden Vorrichtung kommuniziert. Solchenfalls ist das Stellorgan etwa in Form einer Hülse ausgebildet.

Weitere Merkmale, Einzelheiten und Vorteile der Erfindung ergeben sich aus der zeichnerischen Darstellung und nachfolgenden Beschreibung zweier bevorzugter Ausführungsformen der erfindungsgemäßen Unterdruckhandhabungseinrichtung. In der Zeichnung zeigt:
- Figur 1: eine erste Ausführungsform einer erfindungsgemäßen Unterdruckhandhabungseinrichtung im unbelegten Zustand;
- Figur 2: die Unterdruckhandhabungseinrichtung nach Figur 1 mit einem angesaugten Gegenstand;
- Figur 3: die Unterdruckhandhabungseinrichtung nach Figur 2 mit sich ablösendem Gegenstand;
- die Figuren 4a und 4b: eine weitere Ausführungsform der erfindungsgemäßen Unterdruckhandhabungseinrichtung im unbelegten Zustand;
- die Figuren 5a und 5b: die Unterdruckhandhabungseinrichtung nach Figuren 4a und 4b mit angesaugtem Gegenstand.

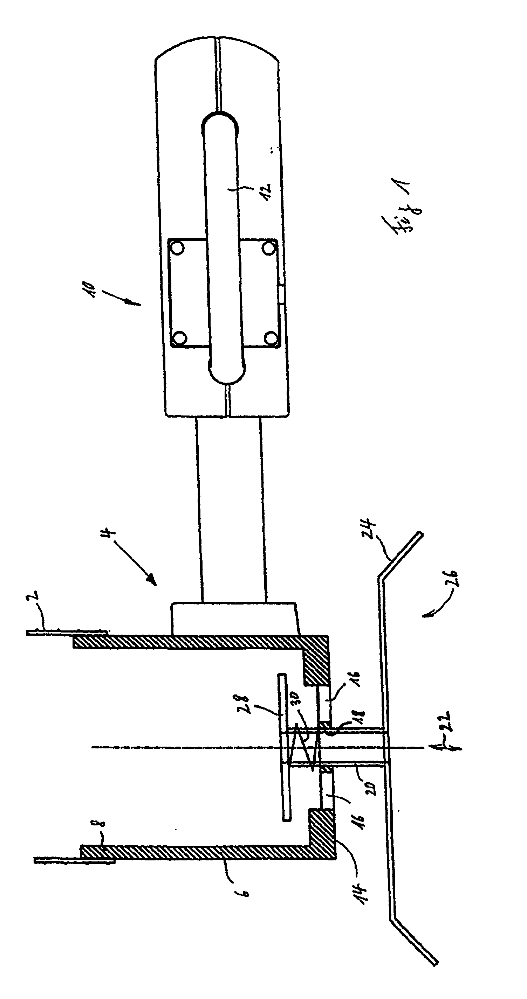

Die Figuren 1 bis 3 zeigen eine Unterdruckhandhabungseinrichtung mit einem lediglich angedeuteten Hubschlauch 2 und einer insgesamt mit dem Bezugszeichen 4 bezeichneten Sauggreifereinrichtung. Die Sauggreifereinrichtung 4 umfasst einen Grundkörper 6, an dessen zylinderförmigem Anschlussflansch 8 der Hubschlauch 2 lösbar und vakuumdicht befestigt ist. An dem Grundkörper 6 ist eine manuell betätigbare Bedienungseinheit 10 mit mehreren Handgriffen 12 befestigt.

Der Grundkörper 6 umfasst einen Boden 14 mit Strömungsöffnungen 16 und einer Durchgangsöffnung 18, in der ein Stössel 20 in Aufsetzrichtung 22 gleitverschieblich aufgenommen ist. Der Stössel 20 trägt einen schematisch dargestellten Sauggreifer 24, welcher auf einen anzuhebenden Gegenstand oder einen beliebigen Gegenstand aufsetzbar ist und eine Ansaugseite 26 der Sauggreifereinrichtung 4 bildet. Der Stössel 20 erstreckt sich durch die Öffnung 18 hindurch in das Innere des Grundkörpers 6 und trägt an seinem inneren stirnseitigen Ende eine Ventilplatte 28, die sich in der Ebene senkrecht zur Stössellängsachse und Aufsetzrichtung 22 erstreckt. Zwischen der Ventilplatte 28 und der Innenseite des Bodens 14 des Grundkörpers 6 ist eine Schraubendruckfeder 30 vorgesehen, welche den Stössel 20 konzentrisch umgibt und diesen nach innen vorspannt.

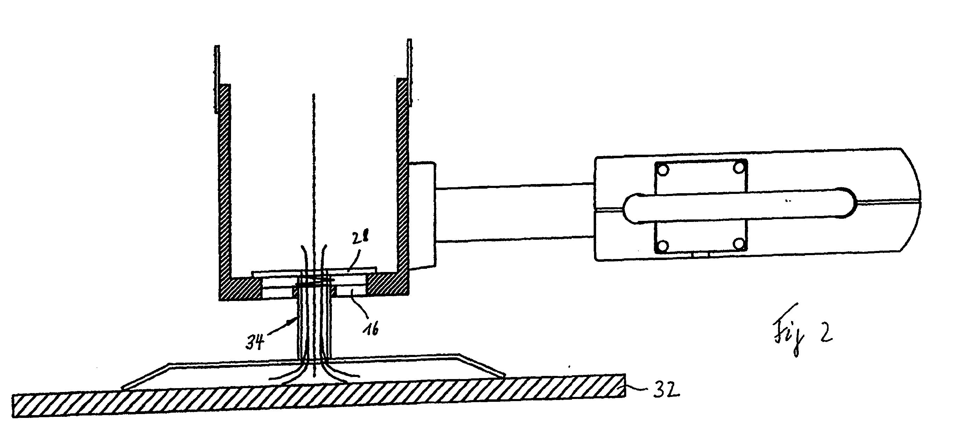

Der Stössel 20 ist innen hohl und bildet eine Strömungsverbindung zwischen dem Sauggreifer 24 und dem Inneren des Grundkörpers 6 bzw. des Hubschlauchs 2. Wenn die Sauggreifereinrichtung 4, wie in Figur 2 dargestellt, auf einen Gegenstand 32 aufgesetzt wird, so wird der Gegenstand über das Innere des Stössels 20 an den Sauggreifer 24 angesaugt. Wird die Sauggreifereinrichtung 4 . angehoben, so wird der Stössel 20 in Folge der Gewichtskraft des Werkstücks 32 entgegen der Vorspannung der Feder 30 nach außen bewegt, solange bis die Ventilplatte 28 gegen die Innenseite des Bodens 14 des Grundkörpers 6 anliegt und dadurch die Strömungsöffnungen 16 verschließt, so dass die gesamte zur Verfügung stehende Saugleistung der unterdruckerzeugenden Vorrichtung zum Anheben des Gegenstands 32 verwendet werden kann.

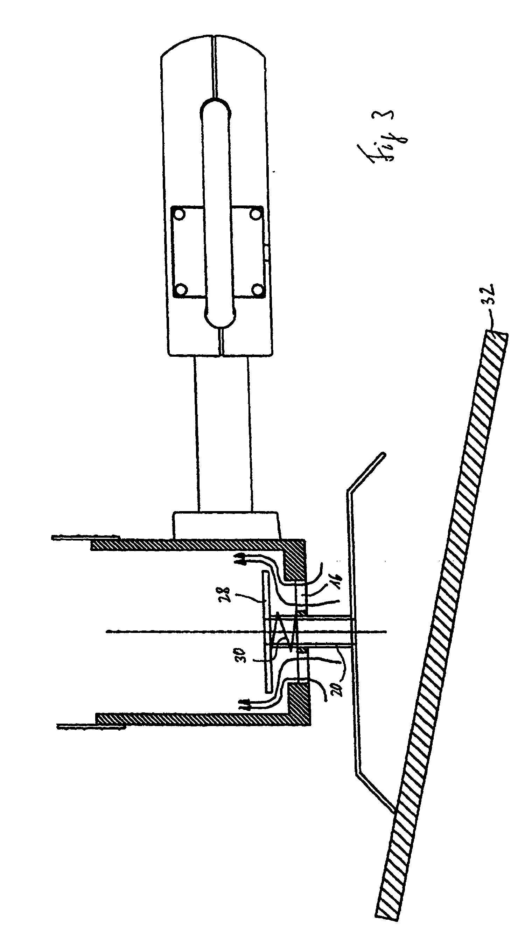

Wenn sich der Gegenstand 32, wie in Figur 3 dargestellt, unbeabsichtigt ablöst, so wird der Stössel 20 und damit die Ventilplatte 28 sofort in ihre in den Figuren 1 und 3 dargestellte Ausgangsstellung gebracht, in der die Ventilplatte 28 die Strömungsöffnungen 16 freigibt, so dass hinreichend Luft in das Innere der Unterdruckhandhabungseinrichtung einströmen kann, um ein nach-oben-Schnellen der Sauggreifereinrichtung 4 zu verhindern. Der Stössel 20 wirkt daher als gewichtskraftbetätigtes Stellorgan 34, welches unter der Wirkung der Gewichtskraft eines angesaugten Gegenstands einen Strömungsquerschnitt ins Innere des Hubschlauchs verschließt bzw. im unbelegten Zustand der Sauggreifereinrichtung freigibt.

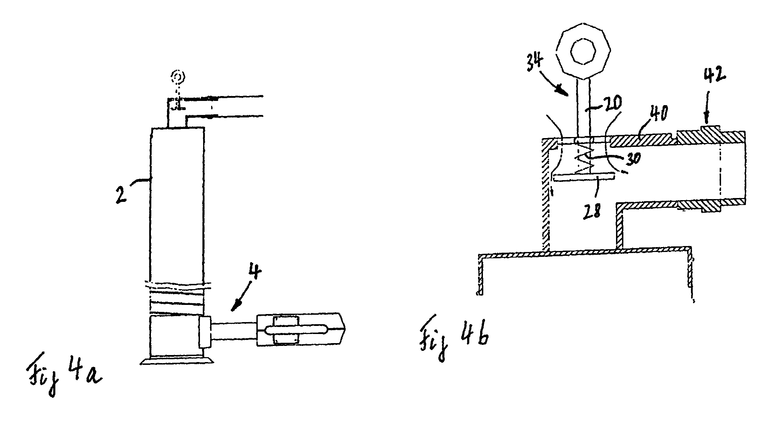

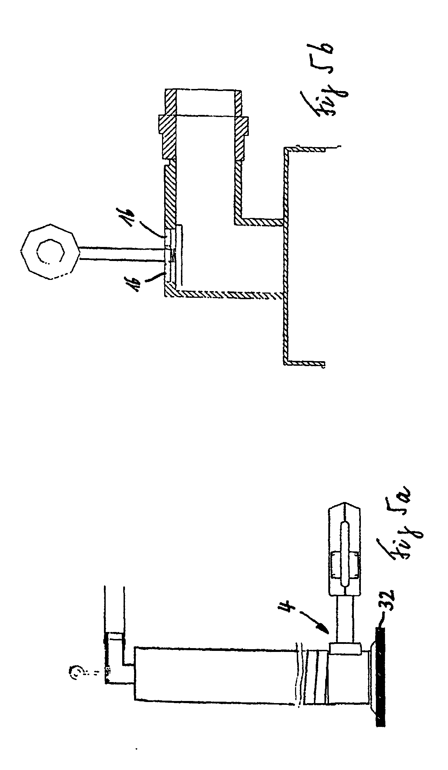

Die Figuren 4a, 4b und 5a, 5b zeigen eine weitere Ausführungsform einer Unterdruckhandhabungseinrichtung mit Hubschlauch 2 und Sauggreifereinrichtung 4. Bei dieser Ausführungsform bildet ein gewichtskraftbetätigtes Stellorgan 34 eine drehbare Aufhängung der Unterdruckhandhabungseinrichtung. Wie bei dem Ausführungsbeispiel nach Figuren 1 bis 3 umfasst das Stellorgan 34 einen Stössel 20, der sich aber in diesem Fall durch die Wandung 40 eines Winkelstücks hindurch erstreckt, welches das dem Sauggreifer abgewandte Ende des Hubschlauchs 2 mit einem Anschluss 42 eines Schlauchs, der im folgenden zu der nicht dargestellten unterdruckerzeugenden Vorrichtung führt, koppelt. Der Stössel 20 trägt im Inneren wiederum eine Ventilplatte 28 und ist durch eine Druckfeder 30 nach Innen vorgespannt. Wenn an der Sauggreifereinrichtung 4, wie in den Figuren 5a, b dargestellt, ein Gegenstand 32 angesaugt und mit der Sauggreifereinrichtung 4 angehoben wird, so wird unter der Wirkung der Gewichtskraft des Gegenstands 32 die Druckfeder 30 zusammengedrückt, so dass die Ventilplatte 28 in Anlage an die Innenseite der Wandung 40 gelangt und die dort vorgesehenen Strömungsöffnungen 16 verschließt. Sollte sich der Gegenstand 32 unbeabsichtigt lösen (nicht dargestellt) so wird infolge der Gewichtskraftreduzierung die Feder 30 den Stössel 20 nach innen bewegen, und hierdurch wird über die Strömungsöffnungen 16 ein Strömungsquerschnitt freigegeben, der ein ungewolltes nach-oben-Schnellen der Sauggreifereinrichtung 4 verhindert.

## Patentansprüche

1. Unterdruckhandhabungseinrichtung mit einem an eine unterdruckerzeugende Vorrichtung anschließbaren Hubschlauch (2) und einer auf einen zu handhabenden Gegenstand aufsetzbaren Sauggreifereinrichtung (4), mit der der Gegenstand ansaugbar und durch Kontrahieren des Hubschlauchs (2) anhebbar ist, **gekennzeichnet durch** ein gewichtskraftbetätigtes Stellorgan (34), welches unter der Wirkung der Gewichtskraft eines an der Saugseite der Sauggreifereinrichtung (4) angesaugten Gegenstands (32) einen Strömungsquerschnitt ins Innere des Hubschlauchs (2) verschließt und im unbelegten Zustand der Sauggreifereinrichtung (4) freigibt.

2. Unterdruckhandhabungseinrichtung nach Anspruch 1, **dadurch gekennzeichnet, dass** das Stellorgan (34) eine Aufhängung des Hubschlauchs (2) bildet.

3. Unterdruckhandhabungseinrichtung nach Anspruch 1, **dadurch gekennzeichnet, dass** das Stellorgan (34) federvorgespannt ist und einen die Ansaugseite (26) bildenden und auf einen Gegenstand (32) aufsetzbaren Sauggreifer (24) trägt.

4. Unterdruckhandhabungseinrichtung nach Anspruch 1, 2 oder 3, **dadurch gekennzeichnet, dass** das Stellorgan (34) einen federvorgespannten Stößel (20) umfasst, der entsprechend der Gewichtskraft in vertikaler Richtung hin- und herbewegbar ist.

5. Unterdruckhandhabungseinrichtung nach einem der vorstehenden Ansprüche, **dadurch gekennzeichnet, dass** das Stellorgan (34) eine Ventilplatte (28) trägt und mit dieser den Strömungsquerschnitt verschließt oder freigibt.

6. Unterdruckhandhabungseinrichtung nach Anspruch 5, **dadurch gekennzeichnet, dass** die Ventilplatte (28) von innen gegen eine Strömungsöffnung (16) in einer Gehäusewand dichtend anlegbar ist.

7. Unterdruckhandhabungseinrichtung nach einem der Ansprüche 4 bis 6, **dadurch gekennzeichnet, dass** der Sauggreifer (24) über das Innere des Stellorgans (34) mit dem Hubschlauch (2) und damit mit der unterdruckerzeugenden Vorrichtung kommuniziert.

## Claims

1. A vacuum manipulation device, having a lifter hose (2), which can be connected to a vacuum-generating device, and a suction gripper device (4), which can be placed on an object to be manipulated and with which the object can be drawn-up by suction and lifted by contracting the lifter hose (2), **characterized by** a weight-actuated setting element (34) which, under the effect of the weight of an object (32) drawn by suction against the suction side of the suction gripper device (4), blocks a flow cross section into the interior of the lifter hose (2), and unblocks it in the unoccupied state of the suction gripper device (4).

2. The vacuum manipulation device in accordance with claim 1, **characterized in that** the setting element (34) constitutes a suspension for the lifter hose (2).

3. The vacuum manipulation device in accordance with claim 1, **characterized in that** the setting element (34) is prestressed by a spring and supports a suction gripper (24), which constitutes the suction side (26) and which can be set on an object (32).

4. The vacuum manipulation device in accordance with claim 1, 2 or 3, **characterized in that** the setting element (34) comprises a plunger (20), which is prestressed by a spring and which can be moved back and forth in vertical direction in accordance with the weight.

5. The vacuum manipulation device in accordance with one of the preceding claims, **characterized in that** the setting element (34) supports a valve plate (28), with which it blocks or unblocks the flow cross section.

6. The vacuum manipulation device in accordance with claim 5, **characterized in that** the valve plate (28) can be sealingly placed from the inside against a flow opening (16) in a housing wall.

7. The vacuum manipulation device in accordance with one of claims 4 to 6, **characterized in that** the suction gripper (24) communicates via the interior of the setting element (34) with the lifter hose (2), and therefore with the vacuum-generating device.

## Revendications

1. Installation de manutention à vide, comprenant un tuyau élévateur (2) pouvant être raccordé à un dispositif générateur de vide, et une installation à pince aspirante (4) applicable à un objet à manipuler et permettant d'aspirer et de soulever l'objet par contraction du tuyau élévateur (2), **caractérisée par** un organe de réglage (34) actionné par le poids, qui, sous l'effet du poids d'un objet (32) aspiré du côté aspiration de l'installation à pince aspirante (4), ferme une section de passage vers l'intérieur du tuyau élévateur (2) et la libère à l'état inoccupé de l'installation à pince aspirante (4).

2. Installation de manutention à vide selon la revendication 1, **caractérisée en ce que** l'organe de réglage (34) forme une suspension du tuyau élévateur (2).

3. Installation de manutention à vide selon la revendication 1, **caractérisée en ce que** l'organe de réglage (34) est précontraint par ressort et porte une pince aspirante (24) formant le côté aspiration (26) et pouvant être appliquée à un objet (32).

4. Installation de manutention à vide selon la revendication 1, 2 ou 3, **caractérisée en ce que** l'organe de réglage (34) comprend un poussoir (20) précontraint par ressort qui est mobile en alternance dans la direction verticale en fonction du poids.

5. Installation de manutention à vide selon l'une quelconque des revendications précédentes, **caractérisée en ce que** l'organe de réglage (34) porte un clapet de soupape (28) et ferme ou libère la section de passage à l'aide de celui-ci.

6. Installation de manutention à vide selon la revendication 5, **caractérisée en ce que** le clapet de soupape (28) peut être plaqué de l'intérieur et de façon étanche sur un orifice de passage (16) dans une paroi de boîtier.

7. Installation de manutention à vide selon l'une quelconque des revendications 4 à 6, **caractérisée en ce que** la pince aspirante (24) communique par l'intérieur de l'organe de réglage (34) avec le tuyau élévateur (2) et donc avec le dispositif générateur de vide.
